# EUROPÄISCHE PATENTANMELDUNG

(11) **EP 4 782 983 A1**
(43) Veröffentlichungstag der Anmeldung: **29.07.2026**
(21) Anmeldenummer: 25153799.9
(22) Anmeldetag: 24.01.2025
(51) Int. Cl.: G06F 3/12

(54) **VERFAHREN ZUM LOKALEN DRUCKEN**

(71) Anmelder: Genius Bytes Software Solutions GmbH, 44801 Bochum (DE)
(72) Erfinder: Horst, Kerstin, 44801 Bochum (DE); Horst, Matthias, 44801 Bochum (DE); Pempelforth, Thomas, 47802 Krefeld (DE); Clas, Bernd, 78465 Konstanz (DE)
(74) Vertreter: Cohausz & Florack

(57) **Zusammenfassung**

Die Erfindung betrifft ein Verfahren, umfassend Bereitstellen mindestens eines lokalen Rechners, umfassend mindestens einen lokalen Drucker, mindestens eine Nutzerschnittstelle und einen Druckauftragsrouter mit einer eindeutigen Routerkennung und eines Hintergrundsystems mit mindestens einem Druckauftragsdatenspeicher, wobei zumindest einem Teil der in dem Druckauftragsdatenspeicher gespeicherten Druckaufträgen jeweils eine Nutzerkennung zugeordnet ist, Herstellen einer TCP/IP-basierten Datenverbindung zwischen dem lokalen Rechner und dem Hintergrundsystem über ein Datennetz, wobei das Hintergrundsystem eingerichtet ist zum Speichern einer Zuordnung zwischen der hergestellten TCP/IP-basierten Datenverbindung und der über die hergestellte TCP/IPbasierte Datenverbindung übertragene Routerkennung, Bereitstellen, durch den lokalen Rechner, zumindest der Routerkennung, derart, dass zumindest die Routerkennung durch ein mobiles Endgerät eines Nutzers erfassbar ist, Empfangen eines Authentifizierungsdatensatzes, enthaltend zumindest eine Nutzerkennung des Nutzers des mobilen Endgeräts, Übertragen eines Druckauftragsdatensatzes, enthaltend mindestens einen Druckauftrag, der der empfangenen Nutzerkennung zugeordnet ist, nach einer erfolgreichen Authentifizierung, Empfangen, durch das Hintergrundsystem von dem mobilen Endgerät, mindestens eines zu druckenden Druckauftrags, ausgewählt aus dem übertragenen Druckauftragsdatensatz, und Übertragen, durch das Hintergrundsystem an den lokalen Rechner, des mindestens einen zu druckenden Druckauftrags über die hergestellte TCP/IP-basierten Datenverbindung, basierend auf der empfangenen Routerkennung, derart, dass der mindestens eine zu druckende Druckauftrag durch den lokalen Drucker druckbar ist.

## Beschreibung

Die Erfindung betrifft ein Verfahren zum lokalen Drucken, insbesondere während einer mit einem Hintergrundsystem hergestellten TCP/IP-basierten Datenverbindung. Darüber hinaus betrifft die Erfindung ein Hintergrundsystem und ein Drucksystem mit einem Hintergrundsystem.

Aus dem Stand der Technik sind Verfahren zum Betreiben von Drucksystemen mit mindestens einem Drucker bekannt, die von mindestens einem Rechner bzw. einer Computervorrichtung zum Drucken eines Druckauftrags genutzt werden können.

Ein Rechner kann über einen Drucker verfügen bzw. mit einem Drucker verbunden sein. Eine auf dem Rechner installierte und durch einen Prozessor ausführbare Anwendung kann mittels einer Nutzerschnittstelle von einem Nutzer bedient werden. Beispielsweise kann ein Druckauftrag (auch als print job bezeichnet) durch die Anwendung generiert und/oder ausgewählt werden. Der generierte Druckauftrag kann von dem Rechner an den Drucker des Rechners übertragen werden, so dass dieser von dem Drucker in bekannter Weise ausgedruckt wird.

In der heutigen Zeit wird vermehrt im sogenannten Homeoffice gearbeitet und/oder ein Nutzer ist mit seinem (mobilen Rechner samt lokalen Drucker) bei einem Kunden. Hierbei ist es insbesondere aus Sicherheitsgründen üblich, dass beispielsweise eine durch einen im Homeoffice und/oder bei einem Kunden befindlichen Nutzer zu bedienende (Software-)Anwendung auf einem (zentralen) Hintergrundsystem installiert und von mindestens einem Prozessor des Hintergrundsystems ausgeführt werden kann. Ein geographisch entfernt von dem Hintergrundsystem angeordneter, sogenannter lokaler Rechner kann mit dem Hintergrundsystem über eine TCP/IPbasierte Datenverbindung über ein öffentliches Datennetz (insbesondere das Internet) verbunden sein/werden. Beispielsweise kann eine entsprechende Datenverbindung zwischen dem lokalen Rechner und dem Hintergrundsystem über das öffentliche Datennetz derart hergestellt werden, dass ein Bedienen der mindestens einen Hintergrundanwendung des Hintergrundsystems durch die mindestens eine Nutzerschnittstelle des lokalen Rechners ermöglicht wird. Dies kann auch als Remote-Desktop Sitzung bezeichnet. Insbesondere kann die TCP/IP-basierte Datenverbindung keine Tunnelverbindung sein bzw. umfassen.

Bei einer TCP/IP-basierten Datenverbindung kann eine Mehrzahl von Hintergrundanwendungen bzw. Hintergrundanwendungsprogramme auf mindestens einer Datenverarbeitungsvorrichtung des Hintergrundsystems (auch als Server bzw. Serversystem bezeichnet) ausgeführt und auf einem (geographisch entfernt von dem Hintergrundsystem angeordneten) lokalen Rechner bzw. Computer (auch als Client bezeichnet) dargestellt und bedient werden. Insbesondere werden nur Darstellungsdaten und Bediendaten über die Datenverbindung ausgetauscht, insbesondere ohne dass hierbei Dokumente und dergleichen über die hergestellte Datenverbindung übertragen werden. Im Gegensatz beispielsweise zum Screen-Sharing muss sich kein Nutzer hierbei am Hintergrundsystem lokal anmelden.

Während einer hergestellten Remote-Desktop-Sitzung, also während einer hergestellten und zuvor beschriebenen Datenverbindung zwischen lokalem Rechner und Hintergrundsystem, läuft diese Sitzung unabhängig von einer anderen eventuell laufenden Remote-Desktop-Sitzung zwischen diesem Hintergrundsystem und einem weiteren lokalen Rechner. Mit anderen Worten, eine Mehrzahl von lokalen und geographisch entfernt von dem Hintergrundsystem angeordneten Rechnern kann gleichzeitig über jeweilige TCP/IP-basierte Datenverbindungen mit dem Hintergrundsystem verbunden sein, um insbesondere ein Bedienen einer Mehrzahl von Hintergrundanwendungen des Hintergrundsystems mittels des jeweiligen lokalen Rechners bzw. den jeweiligen Nutzerschnittstellen zu ermöglichen.

Problematisch bei einem derartigen Drucksystem des Stands der Technik, umfassend Hintergrundsystem und mindestens einen lokalen Rechner, ist jedoch das Drucken von Druckaufträgen, die insbesondere in einem Druckauftragsdatenspeicher des Hintergrundsystem gespeichert sein können. So verhindert insbesondere ein Sicherheitsmodul des Hintergrundsystems ein Übertragen des Druckauftrags an einen lokalen Drucker des lokalen Rechners über die hergestellte TCP/IP-basierte Datenverbindung.

Eine Möglichkeit zum Ausdrucken des in dem Hintergrundsystem gespeicherten Druckauftrags ist die Nutzung eines Druckers des Hintergrundsystems, der an die mindestens eine Datenverarbeitungsvorrichtung des Hintergrundsystems unmittelbar angeschlossen ist. Nachteilig an dieser Lösung ist jedoch, dass sich dieser Drucker an dem Ort des Hintergrundsystems (z.B. in einem Bürogebäude) befindet und damit geographisch entfernt von dem lokalen Rechner (der sich z.B. in einem Wohngebäude befinden kann) des Nutzers. Auf den ausgedruckten Druckauftrag kann der Nutzer somit nicht zugreifen, sondern erst dann, wenn er/sie sich wieder an dem Ort des Hintergrundsystems befindet, also beispielsweise im Bürogebäude (und damit nicht mehr im Homeoffice und/oder bei einem Kunden).

Es ist jedoch regelmäßig wünschenswert, dass ein in dem Hintergrundsystem vorliegender bzw. gespeicherter Druckauftrag durch einen lokalen Drucker des lokalen Rechners ausgedruckt wird, um insbesondere dem (im Homeoffice und/oder bei einem Kunden befindlichen) Nutzer einen unmittelbaren Zugriff auf den ausgedruckten Druckauftrag zu ermöglichen. Ein unmittelbares Übertragen des Druckauftrags über die hergestellte TCP/IP-basierte Datenverbindung ist jedoch aufgrund der in der Regel vorgesehenen Sicherheitseinstellungen bzw. Sicherheitsmodule nicht möglich, wie beschrieben wurde. Um dennoch ein lokales Ausdrucken zu ermöglichen, kann ein Tunnel, also ein gekapselter Übertragungsweg, zwischen dem lokalen Rechner und dem Hintergrundsystem hergestellt werden. Dies kann jedoch beispielsweise bei einem Kunden nicht möglich sein oder nur mit einem hohen Aufwand.

Als weitere Umgehungslösung für das Problem, dass ein lokales Drucken nicht möglich ist, ist es bekannt, dass ein Nutzer sich über einen ersten (z.B. geschäftlichen) E-Mail-Account (oder dergleichen) eine E-Mail mit dem zu druckenden Druckauftrag (z.B. als Anhang) an einen zweiten (z.B. privaten) E-Mail-Account (oder dergleichen) des Nutzers sendet. Dann kann der Nutzer unabhängig von der TCP/IP-basierten Datenverbindung den zweiten E-Mail-Account an dem lokalen Rechner öffnen und ein Ausdrucken des Druckauftrags durch den angeschlossenen lokalen Drucker in bekannter Weise veranlassen. Dieses Vorgehen ist jedoch nicht nur aufwendig, sondern auch aus Sicherheitsgründen problematisch, da der Druckauftrag über eine nicht gesicherte Verbindung übertragen wird. Daher besteht das Risiko, dass unberechtigte Dritte Kenntnis von dem Druckauftrag erlangen.

Daher liegt der Erfindung die Aufgabe zugrunde, eine Möglichkeit zu schaffen, die bei einer TCP/IP-basierten Datenverbindung ein nutzerfreundliches und gleichzeitig sicheres Ausdrucken durch einen lokalen und entfernt von dem Hintergrundsystem angeordneten Drucker eines lokalen Rechners erlaubt.

Die Aufgabe wird gemäß einem ersten Aspekt der Erfindung gelöst durch ein (computerimplementiertes) Verfahren gemäß Anspruch 1. Das Verfahren dient zum lokalen Drucken eines Druckauftrags, insbesondere während einer (hergestellten) Remote-Desktop Sitzung. Das Verfahren umfasst:
- Bereitstellen mindestens eines lokalen Rechners, umfassend mindestens einen lokalen Drucker, mindestens eine Nutzerschnittstelle und einen Druckauftragsrouter mit einer eindeutigen Routerkennung,
- Bereitstellen eines Hintergrundsystems mit mindestens einem Druckauftragsdatenspeicher, wobei zumindest einem Teil der in dem Druckauftragsdatenspeicher gespeicherten Druckaufträge jeweils eine Nutzerkennung zugeordnet ist,
- Herstellen einer TCP/IP-basierten Datenverbindung zwischen dem lokalen Rechner und dem Hintergrundsystem über ein Datennetz, wobei das Hintergrundsystem eingerichtet ist zum Speichern einer Zuordnung zwischen der hergestellten TCP/IP-basierten Datenverbindung und der über die hergestellte TCP/IP-basierte Datenverbindung übertragene Routerkennung,
- Bereitstellen, durch den lokalen Rechner, zumindest der Routerkennung, derart, dass zumindest die Routerkennung durch ein mobiles Endgerät eines Nutzers erfassbar ist,
- Empfangen, durch das Hintergrundsystem von dem mobilen Endgerät, eines Authentifizierungsdatensatzes, enthaltend zumindest eine Nutzerkennung des Nutzers des mobilen Endgeräts,
- Durchführen, durch das Hintergrundsystem, einer Authentifizierungsprüfung zumindest anhand der empfangenen Nutzerkennung,
- Empfangen, durch das Hintergrundsystem von dem mobilen Endgerät, zumindest der Routerkennung,
- Übertragen, durch das Hintergrundsystem an das mobile Endgerät, eines Druckauftragsdatensatzes, enthaltend mindestens einen Druckauftrag, der der empfangenen Nutzerkennung zugeordnet ist, (nur) nach einer erfolgreichen Authentifizierung,
- Empfangen, durch das Hintergrundsystem von dem mobilen Endgerät, mindestens eines zu druckenden Druckauftrags, ausgewählt aus dem übertragenen Druckauftragsdatensatz, und
- Übertragen, durch das Hintergrundsystem an den lokalen Rechner, des mindestens einen zu druckenden Druckauftrags über die hergestellte TCP/IPbasierten Datenverbindung, basierend auf der empfangenen Routerkennung, derart, dass der mindestens eine zu druckende Druckauftrag durch den lokalen Drucker druckbar ist.

Indem im Gegensatz zum Stand der Technik erfindungsgemäß über ein mobiles Endgerät (insbesondere in Form eines Smartphones, Tablets und/oder dergleichen) dem Hintergrundsystem eine durch den lokalen Rechner (beispielsweise den Druckauftragsrouter) bereitgestellte Routerkennung des mindestens über eine weitere Datenverbindung (zwischen Hintergrundsystem und mobilem Endgerät) übermittelt wird, wobei über diese weitere Datenverbindung eine sichere und einfache Nutzerauthentifizierung durchführbar ist, wird eine Möglichkeit bereitgestellt, welche bei einer TCP/IP-basierten Datenverbindung (ohne Tunnel) ein nutzerfreundliches und gleichzeitig sicheres Ausdrucken durch einen lokalen und entfernt von dem Hintergrundsystem angeordneten Drucker eines lokalen Rechners erlaubt. Mit anderen Worten, ein Nutzer (im Homeoffice und/oder bei einem Kunden) erhält in sicherer Weise unmittelbar Zugriff auf einen lokal ausgedruckten Druckauftrag, der in dem Hintergrundsystem beispielsweise generiert und dort insbesondere gespeichert ist.

Das Verfahren dient insbesondere der Verwendung in bzw. während einer hergestellten TCP/IP-basierte Datenverbindung, beispielsweise bei einer Remote-Desktop Sitzung ohne Tunnel, zwischen einem lokalen Rechner und einem entfernt angeordneten Hintergrundsystem. Erfindungsgemäß wird mindestens ein lokaler Rechner (eines Nutzers) und ein geographisch entfernt von dem mindestens einen lokalen Rechner angeordnetes Hintergrundsystem bereitgestellt. Vorzugsweise kann eine Mehrzahl von lokalen Rechnern und ein zentrales Hintergrundsystem bereitgestellt werden.

Ein lokaler Rechner bzw. ein lokaler Computer kann vorzugsweise ein stationärer Arbeitsplatzrechner sein. Bei Varianten der Erfindung kann der lokale Rechner auch ein mobiler, insbesondere tragbarer, lokaler Rechner sein, wie ein Laptop, Smartphone, Tablet-Computer und/oder dergleichen. Dieser kann beispielsweise bei einem Kunden eingesetzt werden. Ein lokaler Rechner umfasst mindestens einen Prozessor und Speichermittel zum Speichern mindestens eines Computerprogramms, das durch den Prozessor ausführbar ist.

Ein lokaler Rechner kann mindestens eine Nutzerschnittstelle aufweisen, vorzugsweise eine Mehrzahl von (unterschiedlichen) Nutzerschnittstellen. Eine Nutzerschnittstelle ist eingerichtet für ein Zusammenwirken bzw. eine Interaktion mit einem Nutzer. Eine Nutzerschnittstelle kann zum Ausgeben von Daten/Informationen und/oder zum Eingeben von Daten/Informationen eingerichtet sein. Beispielsweise kann die mindestens eine Nutzerschnittstelle eine optische Anzeige (z.B. in Form eines Bildschirms), ein Lautsprecher, ein Mikrofon, eine Tastatur, eine Maus, ein Touchdisplay und/oder dergleichen sein.

Zudem weist der mindestens eine lokale Rechner mindestens einen lokalen (stationären oder mobilen) Drucker auf. Dies meint insbesondere, dass zwischen dem lokalen Rechner und dem mindestens einen lokalen Drucker eine (drahtlose und/oder drahtgebundene) Kommunikationsverbindung (z.B. Local Area Network (LAN), ein Wireless LAN (WLAN), Bluetooth etc.) vorhanden ist, also der lokale Drucker an dem lokalen Rechner angeschlossen ist. Hierbei ist unter einem lokalen Drucker eines lokalen Rechners ein Drucker zu verstehen, der an dem Rechner angeschlossen ist und der sich in einer vordefinierten (physischen) Nähe angeordnet ist, beispielsweise in dem gleichen Gebäude, zumindest näher als 10 m, vorzugsweise zumindest näher als 5 m, und/oder vorzugweise in dem gleichen Raum wir der lokale Rechner.

Ein lokaler Drucker umfasst zumindest eine Druckfunktion, beispielsweise in Form eines Druckmoduls. Das Druckmodul ist insbesondere in herkömmlicher Weise dazu eingerichtet, einen Druckauftrag auszudrucken, insbesondere auf ein bedruckbares Medium (z.B. Papier). Weitere Funktionen, wie eine Scanner-Funktion und/oder eine Fax-Funktion, können bei einem lokalen Drucker implementiert sein.

Ein mobiles Endgerät ist insbesondere ein Smartphone und/oder Tablet (insbesondere mit einer Mobilfunkmodul), das sich von dem lokalen Rechner unterscheidet.

Das Hintergrundsystem (auch als Backendsystem bezeichnet) kann von einer oder mehreren (verteilt angeordneten) Datenverarbeitungsvorrichtung/en gebildet sein, beispielsweise in Form von einem oder mehreren Server/n. Beispielsweise kann das Hintergrundsystem durch ein Cloudsystem gebildet sein. Eine Datenverarbeitungsvorrichtung kann insbesondere mindestens einen Prozessor umfassen. Der Prozessor kann beispielsweise eingerichtet sein zum Ausführen mindestens einer in einem Speichermittel des Hintergrundsystems gespeicherten Hintergrundanwendung in Form eines Computerprogramms bzw. von ausführbaren Softwaremodulen.

Das Verfahren umfasst das Herstellen einer TCP/IP-basierte Datenverbindung zwischen dem Hintergrundsystem (insbesondere der mindestens einen Datenverarbeitungsvorrichtung und/oder dem Druckauftragsdatenspeicher des Hintergrundsystems) und dem mindestens einen lokalen Rechner (in herkömmlicher Weise). Insbesondere kann in bekannter Weise eine TCP/IP-basierte Datenverbindung für eine Remote-Desktop-Sitzung zwischen lokalem Rechner und dem Hintergrundsystem über das Internet aufgebaut werden.

Beispielsweise wird eine TCP/IP-basierte Datenverbindung derart aufgebaut, dass mindestens eine Hintergrundanwendung des Hintergrundsystems durch die mindestens eine Nutzerschnittstelle des lokalen Rechners bedienbar und insbesondere darstellbar ist. Beispielsweise kann eine Hintergrundanwendung (z.B. ein Textverarbeitungsprogramm, Bildverarbeitungsprogramm, Tabellenverarbeitungsprogramm, Druckprogramm etc.) eingerichtet sein zum Erstellen eines Dokuments (z.B. Text, Tabelle, Bild etc.) und/oder zum Erstellen eines Druckauftrags. Insbesondere kann durch einen Bildschirm des lokalen Rechners die Hintergrundanwendung dargestellt und beispielsweise über eine Tastatur, Maus etc. des lokalen Rechners durch einen Nutzer bedient werden.

Erfindungsgemäß umfasst der lokale Rechner einen Druckauftragsrouter, insbesondere in Form eines durch einen Prozessor ausführbaren und auf dem Rechner installierten Softwaremoduls. Der Druckauftragsrouter kann eingerichtet sein zum Weiterleiten eines (von dem Hintergrundsystem) empfangen Druckauftrags an den lokalen Drucker, dem beispielsweise eine (für den Druckauftragsrouter eindeutige) Druckerkennung zugeordnet sein kann. Die Druckerkennung kann ein eindeutiger Code und/oder eine eindeutige (Netzwerk-) Adresse des lokalen Druckers sein.

Dem Druckauftragsrouter ist eine (drucksystemweit) eindeutige Routerkennung zugeordnet.

Das Hintergrundsystem ist eingerichtet zum Zuordnen und (temporären) Speichern der Zuordnung (z.B. in einer entsprechenden Datenbank des Hintergrundsystems) zwischen der hergestellten TCP/IP-basierten Datenverbindung und der über die hergestellte TCP/IP-basierte Datenverbindung durch den lokalen Rechner an das Hintergrundsystem übertragene Routerkennung. Insbesondere ist dem Hintergrundsystem bei einer hergestellten TCP/IP-basierte Datenverbindung die zugehörige Routerkennung bekannt (sofern vorhanden).

Ferner ist dem Nutzer des lokalen Rechners und des mobilen Endgeräts eine (systemweit eindeutige) Nutzerkennung zugeordnet. Diese kann zumindest in dem mobilen Endgerät (dauerhaft) gespeichert sein bzw. diesem zugeordnet werden. Vorzugsweise kann auf bereits vorhandene Nutzerkennung zurückgegriffen werden, wie eine Apple-ID, Google-ID oder dergleichen.

Das Hintergrundsystem umfasst zumindest einen Druckauftragsdatenspeicher, eingerichtet zum Speichern von Druckaufträgen. Einem Teil der Druckaufträge, vorzugsweise sämtlichen gespeicherten Druckaufträgen, ist jeweils mindestens eine (zuvor genannte) Nutzerkennung zugeordnet. Hierdurch kann erreicht werden, dass ein Druckauftrag nur durch den mindestens einen zugelassenen und diesem Druckauftrag zugeordneten Nutzer gedruckt werden kann.

Der Druckauftragsrouter ist insbesondere eingerichtet zum Bereitstellen der Routerkennung, derart, dass diese durch ein mobiles Endgerät erfassbar ist. Ein Bereitstellen der Routerkennung insbesondere an dem lokalen Rechner meint insbesondere, dass ein mobiles Endgerät diese Routerkennung nur dann empfangen kann, wenn es sich (und damit der Nutzer, der das mobile Endgerät hält bzw. mit sich führt) in unmittelbarer (physischer) Nähe (z.B. zumindest näher als 5 m, vorzugsweise zumindest näher als 1 m, und/oder vorzugweise in dem Raum, in dem der lokale Rechner angeordnet ist) zu dem lokalen Rechner befindet. Hierdurch kann das Risiko verringert werden, dass ein unberechtigter Dritter die Routerkennung unberechtigterweise empfängt.

Das Hintergrundsystem empfängt, insbesondere über eine weitere Datenverbindung (insbesondere zumindest teilweise eine Mobilfunkverbindung), einen Authentifizierungsdatensatzes, enthaltend zumindest die Nutzerkennung des Nutzers des mobilen Endgeräts, von dem mobilen Endgerät. Insbesondere kann sich der Nutzer an seinem mobilen Endgerät in herkömmlicher Weise authentifizieren, beispielsweise über eine biometrische Überprüfung (z.B. Fingerabdruck, Gesichtserkennung etc.), wie es beispielsweise bei der Apple-ID, Google-ID üblich ist. Diese insbesondere bereits überprüfte Nutzerkennung (z.B.: Apple-ID, Google-ID) kann für die Authentifizierung an bzw. bei dem Hintergrundsystem verwendet werden.

Insbesondere kann ein Authentifizierungsmodul des Hintergrundsystems eine Authentifizierung anhand dieser Nutzerkennung (in bekannter Weise) durchführen.

Ferner kann das mobile Endgerät die erfasste Routerkennung, beispielsweise zusammen mit der Nutzerkennung, aber auch separat hiervon, an das Hintergrundsystem übertragen. Hierdurch wird erreicht, dass das Hintergrundsystem nun Kenntnis über den Nutzer des lokalen Rechners hat und diesen damit insbesondere ansteuern kann.

Insbesondere nur nach einer erfolgreichen bzw. positiven Authentifizierung, also wenn festgestellt wird, dass der Nutzer berechtigt ist) wenn kann der mindestens eine gespeicherte Druckauftrag durch das Hintergrundsystem bestimmt werden, der der empfangenen Nutzerkennung zugeordnet ist. Wenn keine positive Authentifizierung erfolgt und festgestellt wird, dass der Nutzer nicht berechtigt ist, unterbleibt eine derartige Bereitstellung. Dieser mindestens eine Druckauftrag, insbesondere eine Mehrzahl von Druckaufträgen, kann durch das Hintergrundsystem an das mobile Endgerät insbesondere in Form eines Druckauftragsdatensatzes übertragen werden. Beispielsweise kann das mobile Endgerät den mindestens einen verfügbaren Druckauftrag dem Nutzer über eine Anzeige anzeigen.

Erfindungsgemäß empfängt das Hintergrundsystem anschließend von diesem mobilen Endgerät mindestens einen (zu druckenden) Druckauftrag (beispielsweise eine Druckauftragskennung des Druckauftrags), der ausgewählt ist aus dem übertragenen Druckauftragsdatensatz. Insbesondere kann der Nutzer durch eine an dem mobilen Endgerät detektierbare Nutzeraktion einen oder mehrere Druckaufträge bestimmen, die lokal gedruckt werden sollen.

Erfindungsgemäß erfolgt ein Übertragen des mindestens einen Druckauftrags des Nutzers über die hergestellte TCP/IP-basierte Datenverbindung, basierend auf der empfangenen Routerkennung, derart, dass der mindestens eine zu druckende Druckauftrag durch den lokalen Drucker druckbar ist. Insbesondere bestimmt das Hintergrundsystem anhand der von dem mobilen Endgerät erhaltenen Routerkennung die TCP/IP-basierte Datenverbindung, die dieser Routerkennung zugeordnet ist aus den gespeicherten Zuordnungen zwischen TCP/IP-basierter Datenverbindung und Routerkennung. Dann überträgt das Hintergrundsystem den mindestens einen ausgewählten Druckauftrag über die bestimmte TCP/IP-basierte Datenverbindung an den lokalen Rechner. Dieser Rechner bzw. der entsprechende Druckauftragsrouter leitet den Druckauftrag an den lokalen Drucker zum lokalen Ausdrucken weiter. Ggf. kann noch eine Konvertierung des Druckauftrags in ein geeignetes Druckdateiformat erfolgen, beispielsweise durch den Druckauftragsrouter und/oder den Drucker.

Grundsätzlich kann das Bereitstellen der Routerkennung durch den Druckauftragsrouter insbesondere in Form eines Übertragens der Routerkennung in beliebiger Weise bewirkt werden, so lange insbesondere sichergestellt ist, dass sich das mobile Endgerät an dem lokalen Rechner befindet, um diese zu empfangen. Hierdurch kann die Sicherheit weiter erhöht werden.

Gemäß einer bevorzugten Ausführungsform des erfindungsgemäßen Verfahrens kann das Bereitstellen, durch den lokalen Rechner, insbesondere durch den Druckauftragsrouter, der Routerkennung ein Bewirken eines Anzeigens eines optischen Druckercodes, enthaltend die Routerkennung, durch eine Nutzerschnittstelle in Form einer optischen Anzeige des lokalen Rechners umfassen. Insbesondere kann ein Bildschirm des lokalen Rechners den optischen Druckercode anzeigen. Der optische Druckercode kann vorzugsweise die Routerkennung enthalten. Indem die Routerkennung codiert angezeigt wird, kann die Sicherheit in einfacher Weise erhöht werden.

Gemäß einer besonders bevorzugten Ausführungsform kann der optische Druckercode ein Barcode sein, wie ein QR-Code, 2D-Barcode und/oder dergleichen.

Der optische Druckercode kann durch ein optisches Erfassungsmodul des mobilen Endgeräts erfasst werden. Insbesondere kann das optische Erfassungsmodul eine Kamera (mit einem durch einen Prozessor des Endgeräts ausführbaren Software-Bildauswertemodul) sein. Zur Erfassung des Druckercodes ist es insbesondere erforderlich, dass sich das mobile Endgerät in der unmittelbaren Nähe (z.B. kleiner als 5 m, vorzugsweise kleiner als 1 m) zu dem lokalen Rechner bzw. dem Bildschirm des lokalen Rechners befinden muss.

Vorzugsweise kann die Routerkennung aus dem Druckercode (durch das mobile Endgerät) extrahiert werden. Insbesondere kann die aus dem optischen Druckercode extrahierte Routerkennung in einem (sicheren) Datenspeicher des mobilen Endgeräts gespeichert werden. Beispielsweise kann die Routerkennung verschlüsselt in dem Datenspeicher des mobilen Endgeräts gespeichert werden.

Alternativ oder zusätzlich kann die Routerkennung über eine zwischen dem mobilen Endgerät und dem lokalen Rechner herstellbare Nahfeldkommunikationsverbindung übertragen werden. Nicht abschließende Beispiele einer Nahfeldkommunikationsverbindung sind eine RFID-Verbindung, eine NFC-Verbindung und eine Bluetooth-Verbindung. Bei noch anderen Varianten kann auch eine kabelgebundene Übertragung erfolgen.

Gemäß einer weiteren Ausführungsform des erfindungsgemäßen Verfahrens kann die Routerkennung in dem Authentifizierungsdatensatz enthalten sein. Mit anderen Worten, ein gemeinsamer Datensatz kann durch das Hintergrundsystem empfangen werden, enthaltend zumindest die Nutzerkennung und die Routerkennung.

Gemäß einer weiteren Ausführungsform des erfindungsgemäßen Verfahrens können die (insbesondere in bzw. durch das Hintergrundsystem generierten) Druckaufträge in einem Druckauftragsspeicher des Hintergrundsystems gespeichert sein bzw. werden, wie beschrieben wurde. Auf den Druckauftragsspeicher kann vorzugsweise nur eine zentrale Druckauftragsverwaltungseinrichtung des Hintergrundsystems zugreifen. Diese kann insbesondere die empfangenen Daten verarbeiten und das Verfahren steuern/koordinieren.

Wie bereits beschrieben wurde, kann ein Hintergrundsystem aus einer Mehrzahl von (verteilt angeordneten) Datenverarbeitungsvorrichtungen gebildet sein. Eine der Mehrzahl von Datenverarbeitungsvorrichtungen kann insbesondere als (sicherer) Druckauftragsspeicher eingerichtet sein. Vorzugsweise können in einem Druckauftragsspeicher die Druckaufträge verschlüsselt gespeichert werden.

Zudem kann vorgesehen sein, dass nur eine definierte weitere Datenverarbeitungsvorrichtung in Form einer Druckauftragsverwaltungseinrichtung auf den Druckauftragsspeicher zugreifen kann. Insbesondere kann nur eine einzelne Datenverbindung zu dem Druckauftragsspeicher vorhanden sein, die zwischen dem Druckauftragsspeicher und der Druckauftragsverwaltungseinrichtung vorgesehen ist.

Die Druckverwaltungseinrichtung kann eingerichtet sein zum Übertragen eines generierten Druckauftrags an den Druckauftragsspeicher, insbesondere um ein temporäres Speichern des Druckauftrags in dem Druckauftragsspeicher zu bewirken.

Alternativ oder vorzugsweise zusätzlich kann die Druckverwaltungseinrichtung eingerichtet sein zum Empfangen eines Druckdatensatzes eines Nutzers, insbesondere um ein (zuvor beschriebenes) Übertragen des Druckauftrags des Nutzers über die hergestellte TCP/IP-basierten Datenverbindung an den Druckauftragsrouter zu bewirken. Insbesondere kann bei einem Empfang eines Druckdatensatzes bzw. des mindestens einen zu druckenden Druckauftrags durch die Druckverwaltungseinrichtung eine Anfrage generiert werden, enthaltend zumindest die Nutzerkennung, und durch die Druckverwaltungseinrichtung an den Druckauftragsspeicher übertragen. Als Antwort sendet der Druckauftragsspeicher den mindestens einen Druckauftrag an die Druckverwaltungseinrichtung zurück, der dieser Nutzerkennung zugeordnet ist. Die Druckverwaltungseinrichtung kann, falls erforderlich, eine Entschlüsselung des empfangenen verschlüsselten Druckauftrags durchführen. Anschließend kann der mindestens eine (ggf. entschlüsselte) Druckauftrag übertragen werden, wie beschrieben wurde. Ein hoher Sicherheitsstandart kann bereitgestellt werden.

In der Druckauftragsverwaltungseinrichtung kann insbesondere eine Liste zumindest mit den (vorzugsweise sämtlichen) Nutzerkennungen der in dem Druckauftragsspeicher (augenblicklich) gespeicherten Druckaufträgen gespeichert sein. Insbesondere kann die Druckauftragsverwaltungseinrichtung hierdurch in einfacher Weise bei Erhalt einer Informationsanfrage über die derzeitig gespeicherten Druckaufträge informieren und/der bei Erhalt eines Druckdatensatzes direkt prüfen, ob ein entsprechender Druckauftrag für diesen Nutzer vorhanden ist oder nicht. Die Verarbeitungszeit sowie die auszutauschenden Datenmengen zwischen Druckauftragsverwaltungseinrichtung und Druckauftragsspeicher können reduziert werden.

Gemäß einer weiteren Ausführungsform des erfindungsgemäßen Verfahrens kann die TCP/IP-basierten Datenverbindung zwischen dem lokalen Rechner und der (zentralen) Druckauftragsverwaltungseinrichtung des Hintergrundsystems hergestellt werden. Insbesondere bei einer Mehrzahl von lokalen Rechnern kann jede entsprechende TCP/IP-basierten Datenverbindung (nur) mit der (zentralen) Druckauftragsverwaltungseinrichtung aufgebaut werden. Der Authentifizierungsdatensatz und/oder die Routerkennung kann von der Druckauftragsverwaltungseinrichtung empfangen werden. Mit anderen Worten, das mindestens eine mobile Endgerät kann (über die jeweilige mindestens eine weitere Datenverbindung) nur mit der (zentralen) Druckauftragsverwaltungseinrichtung Daten austauschen. Vorzugsweise kann das Übertragen des mindestens einen Druckauftrags des Nutzers durch die Druckauftragsverwaltungseinrichtung gesteuert werden, wie insbesondere beschrieben wurde.

Gemäß einer bevorzugten Ausführungsform des erfindungsgemäßen Verfahrens kann vor dem Bereitstellen, durch den lokalen Rechner, der Routerkennung mindestens ein lokaler Drucker aus einer Mehrzahl von (verfügbaren) lokalen Druckern des lokalen Rechners ausgewählt werden. Insbesondere kann die Druckerkennung des ausgewählten Druckers in dem Druckauftragsrouter gespeichert werden. Bei einem Empfang des mindestens einen zu druckenden Druckauftrags durch den lokalen Rechner, kann der zu druckende Druckauftrag durch den Druckauftragsrouter an den lokalen Drucker geleitet werden, dessen Druckerkennung gespeichert ist. Insbesondere kann hierdurch das lokale Drucken bei einer Mehrzahl an möglichen lokalen Druckern des lokalen Rechners noch weiter vereinfacht werden.

Gemäß einer bevorzugten Ausführungsform des erfindungsgemäßen Verfahrens kann mit dem mindestens einen lokalen Rechner eine Mehrzahl von lokalen Druckern mit jeweils unterschiedlichen Druckereigenschaften verbunden sein, wie beschrieben wurde. Insbesondere kann ein erster lokaler Drucker (der beispielsweise Drucken mit einem ersten Farbdatensatz (z.B. nur schwarz-weiß) ermöglicht) und ein zweiter lokaler Drucker (der beispielsweise Drucken mit einem zweiten sich von dem ersten Farbdatensatz unterscheidenden Farbdatensatz (z.B. farbig) ermöglicht) mit dem gleichen lokalen Rechner verbunden sein. Die zumindest zwei lokalen Drucker können sich insbesondere in einer Druckfunktion bzw. Druckereigenschaft unterscheiden. Jedem der zumindest zwei lokalen Drucker kann eine jeweilige Druckerkennung zugeordnet werden. Mit anderen Worten, der jeweilige lokale Drucker ist anhand der jeweiligen Druckerkennung eindeutig identifizierbar.

Durch den Druckauftragsrouter kann die Druckerkennung des über eine Nutzerschnittstelle (des lokalen Rechners) aus der Mehrzahl von lokalen Druckern ausgewählten lokalen Druckers bereitgestellt werden, derart, dass die der Drucker auswählbar ist. Insbesondere kann der Druckauftragsrouter eingerichtet sein zum Detektieren sämtlicher an den lokalen Rechner angeschlossenen lokalen Drucker. Ferner kann der Druckauftragsrouter, insbesondere bei Erhalt einer entsprechenden Anfrage (z.B. aufgrund einer Nutzereingabe), eingerichtet sein zum Bewirken eines Anzeigens der angeschlossenen lokalen Drucker auf einer optischen Anzeige des lokalen Rechners. Insbesondere können die angezeigten, angeschlossenen lokalen Drucker durch eine Nutzeraktion mittels einer Nutzerschnittstelle auswählbar sein. Bei Detektion einer entsprechenden Nutzeraktion durch den Druckauftragsrouter kann die entsprechende Zuordnung durch den Druckauftragsrouter gespeichert und insbesondere bei Empfang eines Druckauftrags durch das Hintergrundsystem verwendet werden, wie insbesondere zuvor beschrieben wurde.

Gemäß einer weiteren Ausführungsform des erfindungsgemäßen Verfahrens kann das Verfahren ferner umfassen:
- Beschränken des Zugriffs auf das Hintergrundsystem, zumindest auf den Druckauftragsspeicher (bzw. die darin gespeicherten Druckaufträge), durch mindestens ein in dem Hintergrundsystem implementiertes Sicherheitsmodul, und/oder
- Beschränken des Zugriffs auf den lokalen Rechner (bzw. die darin gespeicherten Daten) durch mindestens ein in dem lokalen Rechner implementiertes Sicherheitsmodul.

Vorzugsweise kann das mindestens eine Sicherheitsmodul des Hintergrundsystems und/oder des lokalen Rechners ein Firewall-Modul sein. Durch ein Firewall-Modul kann der Datenfluss von und zu dem Hintergrundsystem bzw. von und zu dem lokalen Rechner kontrolliert werden.

Wie bereits beschrieben wurde, kann gemäß einer weiteren Ausführungsform des erfindungsgemäßen Verfahrens der mindestens eine Druckauftrag des Nutzers durch die mindestens eine Hintergrundanwendung generiert werden. Die mindestens eine Hintergrundanwendung kann insbesondere eine Webdruckanwendung sein. Ein generierter Druckauftrag kann durch die Druckauftragsverwaltungseinrichtung in dem Druckauftragsspeicher gespeichert werden, wie beschrieben wurde.

Vorzugsweise kann das Generieren des Druckauftrags ein Zuordnen einer Nutzerkennung zu dem Druckauftrag umfassen. Insbesondere kann einem generierten Druckauftrag die Nutzerkennung des Nutzers zugeordnet werden, der die Generierung des Druckauftrags bewirkt hat.

Gemäß einer bevorzugten Ausführungsform des erfindungsgemäßen Verfahrens kann das Verfahren ferner umfassen:
- Bereitstellen einer Nutzerdruckberechtigungsdatenbank, enthaltend eine Mehrzahl von Nutzerkennungen, wobei jeder Nutzerkennung mindestens ein Nutzerdruckberechtigungsdatum über die Berechtigung zum lokalen Drucken zugeordnet ist, und
- das Übertragen des mindestens einen Druckauftrags des Nutzers über die hergestellte TCP/IP-basierten Datenverbindung ferner basiert auf dem mindestens einen Nutzerdruckberechtigungsdatum, das der Nutzerkennung des Nutzers zugeordnet ist.

Ein Nutzerdruckberechtigungsdatum kann zumindest indizieren, ob der (grundsätzlich zur Nutzung des Hintergrundsystem berechtigte) Nutzer überhaupt zum lokalen Drucken berechtigt ist oder nicht. Vorzugsweise zusätzlich kann das mindestens eine Nutzerdruckberechtigungsdatum spezifizieren, welche Druckauftragskategorien für den entsprechenden Nutzer für ein lokales Drucken freigegeben sind. Beispielsweise kann vorgegeben sein, dass nur bestimmte Arten von Druckaufträgen durch einen Nutzer lokal ausgedruckt werden dürfen. Alternativ oder zusätzlich kann das mindestens eine Nutzerdruckberechtigungsdatum spezifizieren, ob ein Druckauftrag vor einem lokalen Drucken durch einen vordefinierten Nutzer (z.B. ein Vorgesetzter des Nutzers, der einen Druckauftrag lokal drucken möchte) freigegeben werden muss. In diesem Fall kann beispielsweise eine entsprechende Anfrage an den Vorgesetzten (beispielsweise an das mobile Endgerät des Vorgesetzten) übertragen werden. Erst nach einem Erhalt einer Freigabenachricht als Antwort auf diese Anfrage kann ein zuvor beschriebenes Übertragen des Druckauftrags erfolgen. Ansonsten (also bei keinem Empfang einer Antwort oder einer Sperrantwort) kann ein Übertragen des Druckauftrags blockiert werden.

Bei weiteren Varianten der Erfindung können weitere und/oder andere Spezifizierungen durch das mindestens eine Nutzerdruckberechtigungsdatum vorgegeben werden.

Insbesondere kann jedem Nutzer des Hintergrundsystems mindestens ein Nutzerdruckberechtigungsdatum zugeordnet sein.

Das Hintergrundsystem, insbesondere die Druckauftragsverwaltungseinrichtung, kann vor einem Übertragen des Druckauftrags zunächst das Nutzerdruckberechtigungsdatum des Nutzers überprüfen, dessen Druckauftrag zum lokalen Drucken übertragen werden soll. Wenn bei dem Überprüfen, z.B. durch ein Überprüfungsmodul des Hintergrundsystems, festgestellt wird, dass das Nutzerdruckberechtigungsdatum des Nutzers vorgibt, dass ein lokales Drucken des angeforderten Druckauftrags nicht erlaubt ist, wird ein Übertragen des Druckauftrags blockiert. Wenn bei dem Überprüfen, durch das Überprüfungsmodul des Hintergrundsystems, festgestellt wird, dass das Nutzerdruckberechtigungsdatum des Nutzers vorgibt, dass ein lokales Drucken des angeforderten Druckauftrags erlaubt ist, wird ein Übertragen des Druckauftrags bewirkt und insbesondere durchgeführt.

Wie bereits beschrieben wurde, können, um ein Auswählen eines lokal zu druckenden Druckauftrags durch einen Nutzer zu ermöglichen, vorzugsweise ein Druckauftragsdatensatz mit sämtlichen Druckaufträgen, also insbesondere den in dem Druckauftragsspeicher (augenblicklich) gespeicherten Druckaufträgen, des Nutzers an das mobile Endgerät des Nutzers übertragen werden (basierend insbesondere auf der Nutzerkennung). Als Dateninhalt eines Druckauftrags eines Druckauftragsdatensatzes kann zumindest eine Druckauftragskennung eines ausgewählten Druckauftrags enthalten sein. Vorzugsweise können weitere Daten enthalten sein, wie Druckauftragskategorie des Druckauftrags, Zeitstempel der Generierung des Druckauftrags, ein Titel des Druckauftrags etc.

Gemäß einer weiteren bevorzugten Ausführungsform des erfindungsgemäßen Verfahrens kann das Verfahren ferner umfassen:
- Anzeigen der verfügbaren Druckaufträge des Nutzers auf einer optischen Anzeige des mobilen Endgeräts, derart, dass die Druckaufträge (durch den Nutzer) auswählbar sind, und
- Generieren, durch das mobile Endgerät, des Druckdatensatzes, enthaltend mindestens einen aus den angezeigten Druckaufträgen ausgewählten Druckauftrag des Nutzers (bei Detektion einer Detektion einer Auswahl), und
- Übertragen des generierten Druckdatensatzes an das Hintergrundsystem.

Insbesondere nach einem Empfangen des Druckauftragsdatensatzes durch das mobile Endgerät kann auf einer Anzeige des mobilen Endgeräts die in dem Druckauftragsdatensatz enthaltenden Druckaufträge bzw. die entsprechenden Druckauftragskennungen auf einer optischen Anzeige angezeigt werden. Insbesondere wird der mindestens eine Druckauftrag bzw. die mindestens eine Druckauftragskennung auf einem Bildschirm des mobilen Endgeräts derart angezeigt, dass der Druckauftrag durch eine (manuelle) Nutzeraktion auswählbar ist. Bei Detektion einer entsprechenden Nutzeraktion generiert das mobile Endgerät insbesondere einen Druckdatensatz, enthaltend den mindestens einen aus den angezeigten Druckaufträgen ausgewählten Druckauftrag des Nutzers. Dann kann (ggf. nach einer weiteren Nutzeraktion) der generierte Druckdatensatz an das Hintergrundsystem übertragen werden. In nutzerfreundlicher und gleichzeitig sicherer Weise kann ein in dem Hintergrundsystem gespeicherter Druckauftrag für ein lokales Drucken durch einen lokalen Drucker bestimmt werden.

Ein weiterer Aspekt der Erfindung ist ein Hintergrundsystem zum Ermöglichen eines lokalen Druckens, insbesondere während einer Remote-Desktop-Sitzung, wobei das Hintergrundsystem mindestens einen Druckauftragsdatenspeicher umfasst, wobei zumindest einem Teil der in dem Druckauftragsdatenspeicher gespeicherten Druckaufträgen jeweils mindestens eine Nutzerkennung zugeordnet ist, wobei das Hintergrundsystem mit mindestens einem lokalen Rechner verbindbar ist, umfassend mindestens einen lokalen Drucker, mindestens eine Nutzerschnittstelle und einen Druckauftragsrouter mit einer eindeutigen Routerkennung, und wobei zwischen dem lokalen Rechner und dem Hintergrundsystem eine TCP/IP-basierte Datenverbindung zwischen dem lokalen Rechner und dem Hintergrundsystem über ein Datennetz herstellbar ist, wobei das Hintergrundsystem eingerichtet ist zum Speichern einer Zuordnung zwischen einer hergestellten TCP/IP-basierten Datenverbindung und der über die hergestellte TCP/IP-basierte Datenverbindung übertragenen Routerkennung. Das Hintergrundsystem umfasst mindestens ein Empfangsmodul, eingerichtet zum Empfangen eines Authentifizierungsdatensatzes von einem mobilen Endgerät des Nutzers, enthaltend zumindest eine Nutzerkennung des Nutzers des mobilen Endgeräts. Das Hintergrundsystem umfasst mindestens ein Authentifizierungsmodul, eingerichtet zum Durchführen einer Authentifizierungsprüfung zumindest anhand der empfangenen Nutzerkennung. Das Empfangsmodul ist eingerichtet zum Empfangen der Routerkennung von dem mobilen Endgerät. Das Hintergrundsystem umfasst mindestens ein Übertragungsmodul, eingerichtet zum Übertragen an das mobile Endgerät eines Druckauftragsdatensatzes, enthaltend mindestens einen Druckauftrag, der der empfangenen Nutzerkennung zugeordnet ist, (nur) nach einer erfolgreichen Authentifizierung. Das Empfangsmodul ist eingerichtet zum Empfangen mindestens eines zu druckenden Druckauftrags von dem mobilen Endgerät, ausgewählt aus dem übertragenen Druckauftragsdatensatz. Das Übertragungsmodul ist eingerichtet zum Übertragen des mindestens einen zu druckenden Druckauftrags über die hergestellte TCP/IP-basierten Datenverbindung, basierend auf der empfangenen Routerkennung, derart, dass der mindestens eine zu druckende Druckauftrag durch den lokalen Drucker druckbar ist.

Das Hintergrundsystem kann mindestens eine Datenverarbeitungsvorrichtung umfassen, eingerichtet zur zumindest teilweisen Ausführung und/oder Steuerung des erfindungsgemäßen Verfahrens oder umfassend jeweilige Mittel zur zumindest teilweisen Ausführung und/oder Steuerung des erfindungsgemäßen Verfahrens. Dabei können entweder alle Schritte des erfindungsgemäßen Verfahrens von den Mitteln gesteuert werden, oder alle Schritte des erfindungsgemäßen Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden.

Die Mittel bzw. Module der offenbarten Datenverarbeitungsvorrichtung können, wie beschrieben, Hardware- und/oder Software-Komponenten umfassen. Die Mittel können beispielsweise mindestens einen Speicher mit Programmanweisungen eines Computerprogramms (z.B. des anmeldungsgemäßen Computerprogramms) und mindestens einen Prozessor ausgebildet zum Ausführen von Programmanweisungen aus dem mindestens einen Speicher umfassen. Dementsprechend soll gemäß der Erfindung auch zumindest eine Datenverarbeitungsvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Datenverarbeitungsvorrichtung zu veranlassen, das Verfahren gemäß der Erfindung auszuführen und/oder zu steuern.

Ein weiterer Aspekt der Erfindung ist ein Drucksystem zum lokalen Drucken. Das Drucksystem umfasst mindestens ein zuvor beschriebenes Hintergrundsystem. Das Drucksystem umfasst mindestens einen (zuvor beschriebenen) lokalen Rechner mit mindestens einem lokalen Drucker und mindestens einer Nutzerschnittstelle, beispielsweise eingerichtet zum Bedienen der mindestens einen Hintergrundanwendung des Hintergrundsystems.

Gemäß einer bevorzugten Ausführungsform des erfindungsgemäßen Drucksystems kann das Drucksystem ferner mindestens ein mobiles Endgerät umfassen, eingerichtet zum Erfassen einer durch den lokalen Rechner bereitgestellten Routerkennung und zum Übertragen eines Authentifizierungsdatensatzes. Zum Steuern der durch das mobile Endgerät ausgeführten Schritte kann insbesondere eine Druckanwendung auf dem mobilen Endgerät installierbar sein. Eine installierte Druckanwendung in Form eines Computerprogramms kann insbesondere von dem mindestens einen Prozessor des mobilen Endgeräts ausführbar sein, derart, dass die zuvor beschriebenen Schritte durch das mobile Endgerät ausgeführt werden.

Wie bereits beschrieben wurde, kann ein zuvor beschriebenes Modul, Element etc. zumindest teilweise Hardwareelemente (z.B. Prozessor, Speichermittel etc.) und/oder zumindest teilweise Softwareelemente (z.B. ausführbaren Code) umfassen.

Die Merkmale der Verfahren, Hintergrundsysteme und Drucksysteme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, das erfindungsgemäße Hintergrundsystem und das erfindungsgemäße Drucksystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Hintergrundsystems gemäß der vorliegenden Erfindung,
- Fig. 2: eine schematische Ansicht eines Ausführungsbeispiels eines Drucksystems gemäß der vorliegenden Erfindung mit einem weiteren Ausführungsbeispiel eines Hintergrundsystems gemäß der vorliegenden Erfindung, und
- Fig. 3: ein Diagramm eines Ausführungsbeispiels eines Verfahrens gemäß der vorliegenden Erfindung.

Ähnliche Bezugszeichen werden nachfolgend für zumindest ähnliche Elemente verwendet.

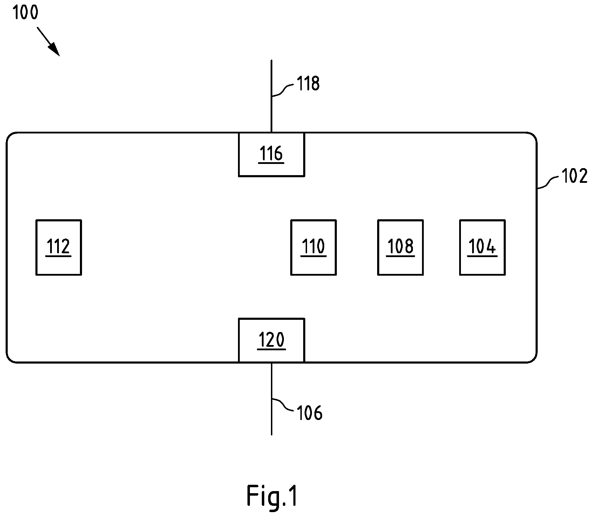

Die Figur 1 zeigt ein Ausführungsbeispiel eines Hintergrundsystems 100 gemäß der vorliegenden Erfindung. Das Hintergrundsystem 100 ermöglicht insbesondere das Generieren eines Druckauftrags und dient zum Ermöglichen eines lokalen Druckens des Druckauftrags. Das Hintergrundsystem 100 umfasst mindestens eine Datenverarbeitungsvorrichtung 102 mit mindestens einem Prozessor 104.

Das Hintergrundsystem 100 ist mit mindestens einem (nicht gezeigten) lokalen Rechner verbindbar, der wiederum mit mindestens einem lokalen Drucker verbindbar ist. Der lokale Rechner umfasst einen Druckauftragsrouter (in Form eines Computerprogramms), der insbesondere von einem Prozessor des lokalen Rechners ausführbar ist. Zwischen dem lokalen Rechner und dem Hintergrundsystem 100 ist eine TCP/IP-basierte Datenverbindung 106 (ohne Datenverbindungstunnel) herstellbar bzw. wird zum lokalen Drucken (in bekannter Weise) hergestellt.

Beispielsweise kann hierüber ein Bedienen einer durch den Prozessor 104 ausführbaren Hintergrundanwendung 108 (z.B. ein Textverarbeitungsprogramm, Bildverarbeitungsprogramm, Tabellenverarbeitungsprogramm, Druckprogramm etc.) des Hintergrundsystems 100 durch mindestens eine Nutzerschnittstelle des lokalen Rechners ermöglicht werden.

Das Hintergrundsystem 100, insbesondere die Datenverarbeitungsvorrichtung 102, umfasst mindestens ein durch den Prozessor 104 ausführbares Zuordnungsmodul 110, eingerichtet zum Zuordnen einer TCP/IP-basierte Datenverbindung 106 zu einer der über die hergestellte TCP/IP-basierte Datenverbindung 106 übertragene Routerkennung des Druckauftragsrouters.

In einem nicht dargestellten Druckauftragsdatenspeicher ist mindestens ein Druckauftrag, insbesondere eine Mehrzahl von Druckaufträgen, gespeichert. Zumindest einem Teil der gespeicherten Druckaufträge, insbesondere sämtlichen Druckaufträgen, ist jeweils mindestens eine Nutzerkennung zugeordnet.

Das Hintergrundsystem 100 umfasst mindestens ein Empfangsmodul 116, eingerichtet zum Empfangen eines Authentifizierungsdatensatzes über eine weitere Datenverbindung 118 (die sich von der TCP/IP-basierten Datenverbindung 106 unterscheidet) von einem (nicht gezeigten) mobilen Endgerät (z.B. ein Smartphone) des Nutzers, enthaltend zumindest eine Nutzerkennung. Zusätzlich kann der Authentifizierungsdatensatz die genannte Routerkennung enthalten. Bei Varianten der Erfindung kann das Empfangsmodul 116 die Routerkennung auch vor oder nach einem Empfang des Authentifizierungsdatensatzes empfangen.

Das Hintergrundsystem 100 umfasst ein Authentifizierungsmodul 112 (in Form eines Computerprogramms), das insbesondere von dem Prozessor 104 ausführbar ist. Das Authentifizierungsmodul führt eine Authentifizierungsprüfung zumindest anhand der empfangenen Nutzerkennung durch, wie insbesondere bereits beschrieben wurde. Wenn diese ergibt, dass der Nutzer ein berechtigter Nutzer ist, kann ein lokales Drucken grundsätzlich ermöglicht werden, also dann, wenn die Authentifizierung des Nutzers erfolgreich ist. Bei einer nicht erfolgreichen Authentifizierung unterbleibt insbesondere ein Übertragen eines Druckauftragsdatensatzes.

Das Hintergrundsystem 100, insbesondere die Datenverarbeitungsvorrichtung 102, umfasst mindestens ein Übertragungsmodul 120, eingerichtet zum Übertragen eines Druckauftragsdatensatzes, enthaltend mindestens einen Druckauftrag, der der empfangenen Nutzerkennung zugeordnet ist, (nur) nach einer erfolgreichen Authentifizierung. Das Empfangsmodul 116 ist eingerichtet zum Empfangen mindestens eines zu druckenden Druckauftrags von dem mobilen Endgerät, ausgewählt aus dem übertragenen Druckauftragsdatensatz. Das Übertragungsmodul 112 ist eingerichtet zum Übertragen des mindestens einen zu druckenden Druckauftrags über die hergestellte TCP/IP-basierten Datenverbindung 106, basierend auf der empfangenen Routerkennung, derart, dass der mindestens eine zu druckende Druckauftrag durch den lokalen Drucker druckbar ist.

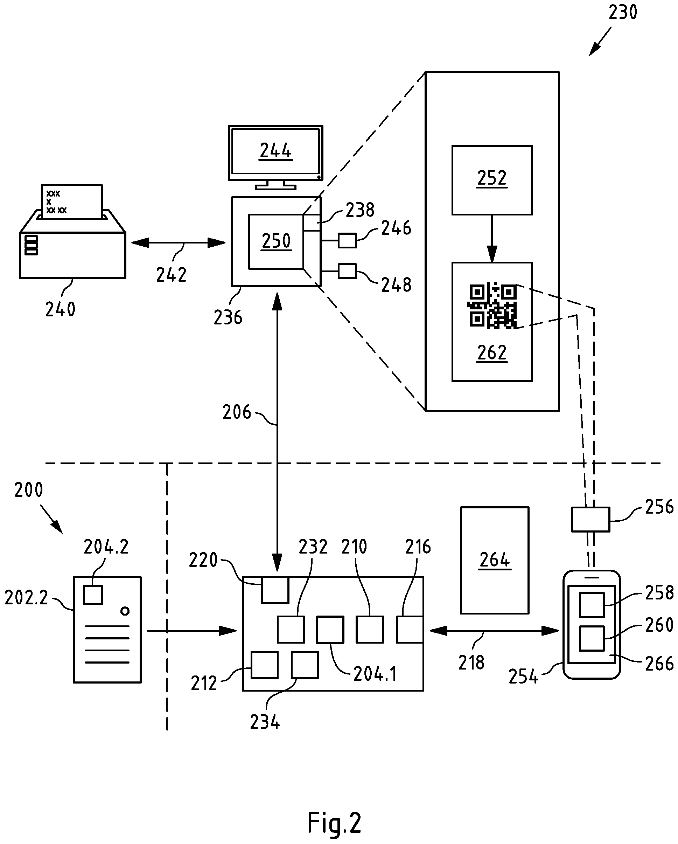

Die Figur 2 zeigt eine schematische Ansicht eines Ausführungsbeispiels eines Drucksystems 230 gemäß der vorliegenden Erfindung mit einem weiteren Ausführungsbeispiel eines Hintergrundsystems 200 gemäß der vorliegenden Erfindung. Zur Vermeidung von Wiederholungen werden nachfolgend im Wesentlichen nur die Unterschiede zu dem vorherigen Ausführungsbeispiel beschrieben und ansonsten auf die Ausführungen zur Figur 1 verwiesen.

Das Hintergrundsystem 200 umfasst vorliegend beispielhaft zwei Datenverarbeitungsvorrichtungen 202.1, 202.2 (jeweils mit einem Prozessor 204.1, 204.2). Eine erste Datenverarbeitungsvorrichtung 202.1 bildet insbesondere eine (zentrale) Druckauftragsverwaltungseinrichtung und die zweite Datenverarbeitungsvorrichtung 202.2 bildet insbesondere einen Druckauftragsspeicher zum Speichern der beispielsweise durch eine (nicht gezeigte) Hintergrundanwendung generierte und insbesondere gespeicherten Druckaufträge. Der Druckauftragsspeicher kann sich in einem gesicherten Netzwerk befinden, während sich die Druckauftragsverwaltungseinrichtung in einem öffentlichen Netzwerk (z.B. Internet) befinden kann.

Die Druckauftragsverwaltungseinrichtung umfasst ein zuvor beschriebenes Empfangsmodul 216, ein zuvor beschriebenes Zuordnungsmodul 210, ein zuvor beschriebenes Übertragungsmodul 220 und ein zuvor beschriebenes Authentifizierungsmodul 212. Ferner kann das Hintergrundsystem 200, insbesondere die Druckauftragsverwaltungseinrichtung, optional ein Überprüfungsmodul 234 und eine Nutzerdruckberechtigungsdatenbank 232 umfassen, enthaltend eine Mehrzahl von Nutzerkennungen, wobei jeder Nutzerkennung mindestens ein Nutzerdruckberechtigungsdatum über die Berechtigung zum lokalen Drucken zugeordnet sein kann.

Das Übertragen des mindestens einen Druckauftrags des Nutzers über die hergestellte TCP/IP-basierte Datenverbindung 206 kann ferner basieren auf dem mindestens einen Nutzerdruckberechtigungsdatum, das der Nutzerkennung des Nutzers zugeordnet ist. Insbesondere kann das Überprüfungsmodul 234 vor einem Übertragen des mindestens einen Druckauftrags überprüfen, ob der Nutzer berechtigt ist, diesen Druckauftrag lokal zu drucken, anhand des in der Nutzerdruckberechtigungsdatenbank 232 gespeicherten Nutzerberechtigungsdatum der Nutzerkennung des Nutzers. Nur wenn durch ein Überprüfen des Nutzerberechtigungsdatums festgestellt wird, dass der Nutzer berechtigt ist, den ausgewählten Druckauftrag zu drucken, wird der Druckauftrag übertragen, wie beschrieben wurde. Ansonsten wird ein Übertragen des genannten Druckauftrags blockiert bzw. nicht durchgeführt.

Das Drucksystem 230 umfasst mindestens einen lokalen Rechner 236 mit mindestens einem Prozessor 238 (der sich insbesondere in einem Heimnetzwerk bzw. privaten Netzwerk befinden kann). In der Regel kann ein Drucksystem eine Vielzahl von lokalen Rechnern umfassen. Der mindestens eine (stationäre oder mobile) lokale Rechner 236 umfasst mindestens einen (stationären oder mobilen) lokalen Drucker 240, der über eine drahtgebundene und/oder drahtlose Verbindung 242 (z.B. USB-Verbindung, WLAN-Netzwerk, LAN-Verbindung etc.) mit dem lokalen Rechner 236 verbunden ist. Ein lokaler Drucker 240 ist insbesondere benachbart zu dem lokalen Rechner 236 angeordnet, beispielsweise in dem gleichen Raum oder in einen benachbarten Raum. Beispielsweise kann der lokale Drucker 240 maximal 50 m entfernt von dem lokalen Rechner 236 angeordnet sein, insbesondere maximal 20 m.

Ein lokaler Rechner 236, beispielhaft ein Arbeitsplatzrechner, kann über mindestens eine Nutzerschnittstelle 244, 246, 248 verfügen. Beispielhaft sind vorliegend ein Bildschirm 244, eine Tastatur 246 und eine Maus 248 vorgesehen. Der lokale Rechner 236 umfasst einen (durch den Prozessor 238 des lokalen Rechners 236 ausführbaren) Druckauftragsrouter 250 in Form eines Computerprogramms. Der Druckauftragsrouter 250 ist insbesondere eingerichtet zum Weiterleiten bzw. Routen eines von dem Hintergrundsystem 200 empfangenen Druckauftrags an den lokalen Drucker 240, beispielsweise basierend auf der Druckerkennung, die in dem Druckauftragsrouter 250 gespeichert sein kann.

So kann vor dem Bereitstellen, durch den lokalen Rechner 236, der Routerkennung mindestens ein lokaler Drucker 240 aus einer Mehrzahl von lokalen Druckern 240 des lokalen Rechners 236 ausgewählt werden. Wenn mehr als ein lokaler Drucker 240 verfügbar ist, kann der Druckauftragsrouter 250 beispielsweise zunächst ein Anzeigen einer Druckerliste 252 auf dem Bildschirm 244 bewirken. Insbesondere kann der Druckauftragsrouter 250 eingerichtet sein zum Detektieren sämtlicher lokaler Drucker 240 des lokalen Rechners 236 und insbesondere zum Generieren der Druckerliste 252, basierend auf dem Detektionsergebnis. Die Druckerliste 252 kann sämtliche verfügbare lokale Drucker 240 des lokalen Rechners 236 enthalten bzw. deren Druckerkennungen.

Durch eine Nutzeraktion mittels einer Nutzerschnittstelle 244, 246, 248 kann ein lokaler Drucker 240 aus der Liste auswählbar sein. Die Druckerkennung des ausgewählten Druckers 240 kann in dem Druckauftragsrouter 250 gespeichert werden. Bei einem Empfang des mindestens einen zu druckenden Druckauftrags durch den lokalen Rechner 236 von dem Hintergrundsystem 200 kann der zu druckende Druckauftrag durch den Druckauftragsrouter 250 an den lokalen Drucker 240 geleitet wird, dessen Druckerkennung gespeichert ist.

Der Druckauftragsrouter 250 kann dann ein Bereitstellen der Routerkennung bewirken, derart, dass ein mobiles Endgerät 254 des Nutzers die Routerkennung erfassen kann.

Vorzugsweise kann der Druckauftragsrouter 250 einen optischen Druckercode 262 generieren und insbesondere ein Anzeigen des optischen Druckercodes 262 auf dem Bildschirm 244 bewirken. Der Druckercode 262 enthält insbesondere die Routerkennung.

Das Drucksystem 230 kann vorzugsweise das mobile Endgerät 254 des Nutzers des lokalen Rechners 236 umfassen. Insbesondere kann das Drucksystem 230 eine Mehrzahl von mobilen Endgeräten 254 umfassen, insbesondere von einer entsprechenden Mehrzahl von Nutzern. In bekannter Weise kann an dem mobilen Endgerät 254 vor einer Nutzung des mobilen Endgeräts 254 eine Authentifizierung des Nutzers erfolgen. Dem mobilen Endgerät 254 kann in eindeutiger Weise eine Nutzerkennung zugeordnet sein, wie eine Apple-ID, eine Google-ID etc. Insbesondere ist inhärent, dass das mobile Endgerät 254 nur von dem berechtigten Nutzer mit der Nutzerkennung des mobilen Endgeräts 254 verwendet werden kann.

Das mobile Endgerät 254 kann einen Prozessor 258 und eine auf dem mobilen Endgerät 254 installierte Druckanwendung 260 umfassen, die durch den Prozessor 258 ausführbar ist. Insbesondere steuert die Druckanwendung 260 die durch das mobile Endgerät 254 durchgeführten Schritte. Das mobile Endgerät 254 umfasst eine optische Erfassungseinrichtung 256, insbesondere in Form einer Kamera. Mittels der optischen Kamera kann der Druckercode 262 erfasst werden. Insbesondere kann die Druckanwendung 260 eingerichtet sein zum Extrahieren der Routerkennung aus dem Druckercode 262. Anschließend wird, gesteuert durch die Druckanwendung 260, ein Authentifizierungsdatensatz generiert, enthaltend zumindest die Nutzerkennung und vorzugsweise zusätzlich die extrahierte Routerkennung. Zusätzlich kann ein Zeitstempel enthalten sein. Dann bewirkt die Druckanwendung 260 ein Übertragen des Authentifizierungsdatensatzes an das Hintergrundsystem 200. Mit anderen Worten, ein Empfangen, durch das Hintergrundsystem 200, des Authentifizierungsdatensatzes von dem mobilen Endgerät 254 erfolgt.

Wie bereits beschrieben wurde, erfolgt eine Authentifizierungsprüfung durch das Hintergrundsystem 200 anhand der Nutzerkennung.

Insbesondere nach einer erfolgreichen Authentifizierung kann durch das Hintergrundsystem 200, insbesondere durch die Druckauftragsverwaltungseinrichtung, ein Druckauftragsdatensatz 264 generiert werden. Vorzugsweise kann in der Druckauftragsverwaltungseinrichtung eine Liste der augenblicklich in dem Druckauftragsspeicher gespeicherten Druckaufträge samt zugeordneter Nutzerkennung gespeichert sein. Basierend auf der empfangenen Nutzerkennung können die Druckaufträge des entsprechenden Nutzers identifiziert werden. Nach einem Generieren des Druckauftragsdatensatzes kann dieser an das mobile Endgerät 254 gesendet werden, das den Authentifizierungsdatensatz ausgesendet hat.

Die Druckanwendung 260 kann ein Anzeigen der verfügbaren Druckaufträge auf einer optischen Anzeige 266 des mobilen Endgeräts 254 bewirken, derart, dass ein Nutzer mindestens einen Druckauftrag durch eine Nutzeraktion auswählen kann. Dann kann in zuvor beschriebener Weise mindestens einer der Druckaufträge (es können auch mehr, beispielsweise alle) durch den Nutzer ausgewählt werden. Anschließend kann die Druckanwendung 260 ein Aussenden eines Druckdatensatzes bewirken, enthaltend zumindest den ausgewählten Druckauftrag, beispielsweise die Druckauftragskennung des mindestens einen ausgewählten Druckauftrags.

Dann erfolgt ein Übertragen, durch das Hintergrundsystem an den lokalen Rechner 236, des mindestens einen zu druckenden Druckauftrags über die hergestellte TCP/IP-basierten Datenverbindung 206, basierend auf der empfangenen Routerkennung, derart, dass der mindestens eine zu druckende Druckauftrag durch den lokalen Drucker 240 druckbar ist. Insbesondere wird anhand der über das mobile Endgerät 236 empfangenen Routerkennung die zugehörige TCP/IP-basierte Datenverbindung 206 bestimmt und der mindestens eine Druckauftrag hierüber übertragen.

Bei Erhalt des Druckauftrags leitet der Druckauftragsrouter 250 den Druckauftrag an den lokalen Drucker 240 weiter, dessen Druckerkennung beispielsweise in dem Druckauftragsrouter 250 gespeichert ist. Dann kann in herkömmlicher Weise ein Ausdrucken des Druckauftrags durch den lokalen Drucker 240 erfolgen.

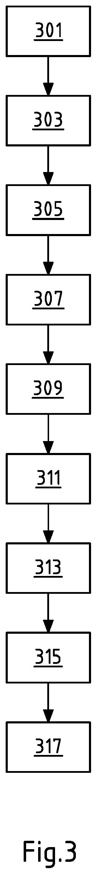

Die Figur 3 zeigt ein Diagramm eines Ausführungsbeispiels eines (computerimplementierten) Verfahrens. Das Verfahren dient zum lokalen Drucken eines Druckauftrags, insbesondere während einer hergestellten TCP/IP-basierten Datenverbindung (ohne Tunnel). Insbesondere kann mit dem Verfahren ein Drucksystem entsprechend der Figur 2 betrieben werden.

In einem Schritt 301 erfolgt ein Bereitstellen mindestens eines lokalen Rechners, umfassend mindestens einen lokalen Drucker, mindestens eine Nutzerschnittstelle und einen Druckauftragsrouter mit einer eindeutigen Routerkennung, wie insbesondere zuvor beschrieben wurde.

In einem Schritt 303 erfolgt ein Bereitstellen eines Hintergrundsystems mit mindestens einem Druckauftragsdatenspeicher, wobei zumindest einem Teil der in dem Druckauftragsdatenspeicher gespeicherten Druckaufträgen jeweils eine Nutzerkennung zugeordnet ist, wie insbesondere zuvor beschrieben wurde.

In Schritt 305 erfolgt ein Herstellen einer TCP/IP-basierten Datenverbindung zwischen dem lokalen Rechner und dem Hintergrundsystem über ein (öffentliches) Datennetz (insbesondere dem Internet), wobei zumindest einem Teil der in dem Druckauftragsdatenspeicher gespeicherten Druckaufträgen jeweils eine Nutzerkennung zugeordnet ist, wie insbesondere zuvor beschrieben wurde.

In einem weiteren Schritt 307 erfolgt ein Bereitstellen, durch den Druckauftragsrouter, zumindest der Routerkennung, derart, dass zumindest die Routerkennung durch ein mobiles Endgerät eines Nutzers erfassbar ist, wie insbesondere bereits beschrieben wurde. Beispielsweise kann der Schritt 307 nach einem Generieren eines Druckauftrags durch eine Nutzeraktion durch den Nutzer initiiert werden.

In Schritt 309 erfolgt ein Empfangen, durch das Hintergrundsystem von dem mobilen Endgerät, eines Authentifizierungsdatensatzes, enthaltend zumindest eine Nutzerkennung des Nutzers des mobilen Endgeräts, wie insbesondere zuvor beschrieben wurde. Vorzugsweise kann der Authentifizierungsdatensatz auch die durch das mobile Endgerät erfasste Routerkennung enthalten. Alternativ kann ein separater Empfangsschritt erfolgen.

In Schritt 311 erfolgt ein Durchführen, durch das Hintergrundsystem, einer Authentifizierungsprüfung zumindest anhand der empfangenen Nutzerkennung, wie insbesondere bereits beschrieben wurde.

In Schritt 313 erfolgt ein durch das Hintergrundsystem an das mobile Endgerät, eines Druckauftragsdatensatzes, enthaltend mindestens einen Druckauftrag, der der empfangenen Nutzerkennung zugeordnet ist, (nur) nach einer erfolgreichen Authentifizierung.

In Schritt 315 erfolgt ein Empfangen, durch das Hintergrundsystem von dem mobilen Endgerät, mindestens eines zu druckenden Druckauftrags, ausgewählt aus dem übertragenen Druckauftragsdatensatz, wie insbesondere bereits beschrieben wurde.

In Schritt 317 erfolgt ein Übertragen, durch das Hintergrundsystem an den lokalen Rechner, des mindestens einen zu druckenden Druckauftrags über die hergestellte TCP/IP-basierten Datenverbindung, basierend auf der empfangenen Routerkennung, derart, dass der mindestens eine zu druckende Druckauftrag durch den lokalen Drucker druckbar ist, wie insbesondere bereits beschrieben wurde.

Es versteht sich, dass die vorgenannten Schritte zumindest teilweise parallel durchgeführt werden können (z.B. Schritte 301 und 303).

### Bezugszeichenliste:

- 100: Hintergrundsystem
- 102: Datenverarbeitungsvorrichtung
- 104: Prozessor
- 106: Datenverbindung
- 108: Hintergrundanwendung
- 110: Zuordnungsmodul
- 112: Authentifizierungsmodul
- 116: Empfangsmodul
- 118: Datenverbindung
- 120: Übertragungsmodul
- 200: Hintergrundsystem
- 202: Datenverarbeitungsvorrichtung
- 204: Prozessor
- 206: Datenverbindung
- 210: Zuordnungsmodul
- 212: Authentifizierungsmodul
- 216: Empfangsmodul
- 220: Übertragungsmodul
- 230: Drucksystem
- 232: Nutzerdruckberechtigungsdatenbank
- 234: Überprüfungsmodul
- 236: lokaler Rechner
- 238: Prozessor
- 240: lokaler Drucker
- 242: Verbindung
- 244: Nutzerschnittstelle
- 246: Tastatur
- 248: Maus
- 250: Druckauftragsrouter
- 252: Druckerliste
- 254: mobiles Endgerät
- 256: optische Erfassungseinrichtung
- 258: Prozessor
- 260: Druckanwendung
- 262: Druckercode
- 264: Auftragsdatensatz
- 266: optische Anzeige
- 301: Schritt
- 303: Schritt
- 305: Schritt
- 307: Schritt
- 309: Schritt
- 311: Schritt
- 313: Schritt
- 315: Schritt
- 317: Schritt

## Patentansprüche

1. Verfahren zum lokalen Drucken, insbesondere während einer Remote-Desktop Sitzung, umfassend:
- Bereitstellen mindestens eines lokalen Rechners (236), umfassend mindestens einen lokalen Drucker (240), mindestens eine Nutzerschnittstelle (244, 246, 248) und einen Druckauftragsrouter (250) mit einer eindeutigen Routerkennung,
- Bereitstellen eines Hintergrundsystems (100, 200) mit mindestens einem Druckauftragsdatenspeicher, wobei zumindest einem Teil der in dem Druckauftragsdatenspeicher gespeicherten Druckaufträgen jeweils eine Nutzerkennung zugeordnet ist,
- Herstellen einer TCP/IP-basierten Datenverbindung (106, 206) zwischen dem lokalen Rechner (236) und dem Hintergrundsystem (100, 200) über ein Datennetz, wobei das Hintergrundsystem (100, 200) eingerichtet ist zum Speichern einer Zuordnung zwischen der hergestellten TCP/IP-basierten Datenverbindung (106, 206) und der über die hergestellte TCP/IP-basierte Datenverbindung (106, 206) übertragene Routerkennung,
- Bereitstellen, durch den lokalen Rechner (236), zumindest der Routerkennung, derart, dass zumindest die Routerkennung durch ein mobiles Endgerät (254) eines Nutzers erfassbar ist,
- Empfangen, durch das Hintergrundsystem (100, 200) von dem mobilen Endgerät (254), eines Authentifizierungsdatensatzes, enthaltend zumindest eine Nutzerkennung des Nutzers des mobilen Endgeräts (254),
- Durchführen, durch das Hintergrundsystem (100, 200), einer Authentifizierungsprüfung zumindest anhand der empfangenen Nutzerkennung,
- Empfangen, durch das Hintergrundsystem (100, 200) von dem mobilen Endgerät (254), zumindest der Routerkennung,
- Übertragen, durch das Hintergrundsystem (100, 200) an das mobile Endgerät (254), eines Druckauftragsdatensatzes, enthaltend mindestens einen Druckauftrag, der der empfangenen Nutzerkennung zugeordnet ist, nach einer erfolgreichen Authentifizierung,
- Empfangen, durch das Hintergrundsystem (100, 200) von dem mobilen Endgerät (236), mindestens eines zu druckenden Druckauftrags, ausgewählt aus dem übertragenen Druckauftragsdatensatz, und
- Übertragen, durch das Hintergrundsystem (100, 200) an den lokalen Rechner (236), des mindestens einen zu druckenden Druckauftrags über die hergestellte TCP/IP-basierten Datenverbindung (106, 206), basierend auf der empfangenen Routerkennung, derart, dass der mindestens eine zu druckende Druckauftrag durch den lokalen Drucker (240) druckbar ist.

2. Verfahren nach Anspruch 1, wobei
- das Bereitstellen, durch den lokalen Rechner (236), zumindest der Routerkennung ein Bewirken eines Anzeigens eines optischen Druckercodes umfasst, enthaltend zumindest die Routerkennung, durch eine optische Anzeige des lokalen Rechners (236).

3. Verfahren nach Anspruch 2, wobei
- der optische Druckercode ein Barcode ist, insbesondere ein QR- und/oder 2D-Barcode.

4. Verfahren nach Anspruch 1 oder 2, wobei
- vor dem Bereitstellen, durch den lokalen Rechner (236), der Routerkennung mindestens ein lokaler Drucker (240) aus einer Mehrzahl von lokalen Druckern des lokalen Rechners (236) ausgewählt wird,
- die Druckerkennung des ausgewählten Druckers (240) in dem Druckauftragsrouter (250) gespeichert wird, und
- bei einem Empfang des mindestens einen zu druckenden Druckauftrags durch den lokalen Rechner (236), der zu druckende Druckauftrag durch den Druckauftragsrouter (250) an den lokalen Drucker (240) geleitet wird, dessen Druckerkennung gespeichert ist.

5. Verfahren nach einem der vorherigen Ansprüche, wobei
- die Druckaufträge in dem Druckauftragsdatenspeicher des Hintergrundsystems (100, 200) gespeichert sind, auf den eine Druckauftragsverwaltungseinrichtung des Hintergrundsystems zugreifen kann,
- wobei in der Druckauftragsverwaltungseinrichtung eine Liste zumindest mit den Druckauftragskennungen der in dem Druckauftragsspeicher gespeicherten Druckaufträge gespeichert ist.

6. Verfahren nach einem der vorherigen Ansprüche, wobei das Verfahren ferner umfasst:
- Beschränken des Zugriffs auf das Hintergrundsystem (100, 200), zumindest auf den Druckauftragsspeicher, durch mindestens ein in dem Hintergrundsystem (100, 200) implementiertes Sicherheitsmodul,
und/oder
- Beschränken des Zugriffs auf den lokalen Rechner (236) durch mindestens ein in dem lokalen Rechner (236) implementiertes Sicherheitsmodul.

7. Verfahren nach einem der vorherigen Ansprüche, wobei
- der mindestens eine Druckauftrag des Nutzers durch die mindestens eine Hintergrundanwendung (108) generiert wird, wobei die mindestens eine Hintergrundanwendung (108) insbesondere ein Webdruckanwendung ist,
- wobei das Generieren des Druckauftrags ein Zuordnen einer Druckauftragskennung und der Nutzerkennung zu dem Druckauftrag umfasst.

8. Verfahren nach einem der vorherigen Ansprüche, wobei das Verfahren ferner umfasst:
- Bereitstellen einer Nutzerdruckberechtigungsdatenbank (232), enthaltend zumindest eine Mehrzahl von Nutzerkennungen, wobei jeder Nutzerkennung mindestens ein Nutzerdruckberechtigungsdatum über die Berechtigung zum lokalen Drucken zugeordnet ist, und
- das Übertragen des mindestens einen Druckauftrags des Nutzers über die hergestellte Datenverbindung ferner basiert auf dem mindestens einen Nutzerdruckberechtigungsdatum, das der Nutzerkennung des Nutzers zugeordnet ist.

9. Hintergrundsystem (100, 200) zum Ermöglichen eines lokalen Druckens, insbesondere während einer Remote-Desktop-Sitzung, wobei das Hintergrundsystem (100, 200) mindestens einen Druckauftragsdatenspeicher umfasst, wobei zumindest einem Teil der in dem Druckauftragsdatenspeicher gespeicherten Druckaufträgen jeweils eine Nutzerkennung zugeordnet ist, wobei das Hintergrundsystem (100, 200) mit mindestens einem lokalen Rechner (236) verbindbar ist, umfassend mindestens einen lokalen Drucker (240), mindestens eine Nutzerschnittstelle (244, 246, 248) und einen Druckauftragsrouter (250) mit einer eindeutigen Routerkennung, und wobei zwischen dem lokalen Rechner (236) und dem Hintergrundsystem (100, 200) eine TCP/IP-basierte Datenverbindung (106, 206) zwischen dem lokalen Rechner (236) und dem Hintergrundsystem (100, 200) über ein Datennetz herstellbar ist, wobei das Hintergrundsystem (100, 200) eingerichtet ist zum Speichern einer Zuordnung zwischen einer hergestellten TCP/IP-basierten Datenverbindung (106, 206) und der über die hergestellte TCP/IP-basierte Datenverbindung (106, 206) übertragenen Routerkennung, umfassend:
- mindestens ein Empfangsmodul (116, 216), eingerichtet zum Empfangen eines Authentifizierungsdatensatzes von einem mobilen Endgerät (254) des Nutzers, enthaltend zumindest eine Nutzerkennung des Nutzers des mobilen Endgeräts (236),
- mindestens ein Authentifizierungsmodul, eingerichtet zum Durchführen einer Authentifizierungsprüfung zumindest anhand der empfangenen Nutzerkennung,
- wobei das Empfangsmodul (116, 216) eingerichtet ist zum Empfangen der Routerkennung von dem mobilen Endgerät, und
- mindestens ein Übertragungsmodul (112, 212), eingerichtet zum Übertragen an das mobile Endgerät (254) eines Druckauftragsdatensatzes, enthaltend mindestens einen Druckauftrag, der der empfangenen Nutzerkennung zugeordnet ist, nach einer erfolgreichen Authentifizierung,
- wobei das Empfangsmodul (116, 216) eingerichtet ist zum Empfangen mindestens eines zu druckenden Druckauftrags von dem mobilen Endgerät (254), ausgewählt aus dem übertragenen Druckauftragsdatensatz, und
- wobei das Übertragungsmodul (112, 212) eingerichtet ist zum Übertragen des mindestens einen zu druckenden Druckauftrags über die hergestellte TCP/IPbasierten Datenverbindung (106, 206), basierend auf der empfangenen Routerkennung, derart, dass der mindestens eine zu druckende Druckauftrag durch den lokalen Drucker (240) druckbar ist.

10. Drucksystem (230) zum lokalen Drucken, umfassend:
- mindestens ein Hintergrundsystem (100, 200) nach Anspruch 9, und
- mindestens einen lokalen Rechner (236), umfassend mindestens einen lokalen Drucker (240), mindestens eine Nutzerschnittstelle (244, 246, 248) und einen Druckauftragsrouter (250) mit einer eindeutigen Routerkennung.

11. Drucksystem (230) nach Anspruch 10, wobei das Drucksystem (230) ferner umfasst:
- mindestens ein mobiles Endgerät (254), eingerichtet zum Erfassen einer durch den lokalen Rechner (236) bereitgestellten Routerkennung und zum Übertragen eines Authentifizierungsdatensatzes.
